(19) **Europäisches Patentamt**
**European Patent Office**
**Office européen des brevets**

(11) **EP 2 729 904 B1**

(12) **EUROPÄISCHE PATENTSCHRIFT**

(45) Veröffentlichungstag und Bekanntmachung des Hinweises auf die Patenterteilung:
**11.03.2015  Patentblatt 2015/11**

(51) Int Cl.:
**G06Q 10/00** (2012.01)     **B60R 16/037** (2006.01)

(21) Anmeldenummer: **12733423.3**

(86) Internationale Anmeldenummer:
**PCT/EP2012/002818**

(22) Anmeldetag: **05.07.2012**

(87) Internationale Veröffentlichungsnummer:
**WO 2013/004379 (10.01.2013 Gazette 2013/02)**

(54) **VERFAHREN ZUM BEREITSTELLEN NUTZERSPEZIFISCHER EINSTELLUNGEN IN EINEM KRAFTFAHRZEUG SOWIE VERFAHREN ZUM ERMITTELN EINER ZUORDNUNG EINES MOBILEN KOMMUNIKATIONSGERÄTS ZU EINEM KRAFTFAHRZEUG AUS EINER MEHRZAHL VON KRAFTFAHRZEUGEN**

METHOD FOR PROVIDING USER-SPECIFIC SETTINGS IN A MOTOR VEHICLE AND METHOD FOR DETERMINING AN ASSIGNMENT OF A MOBILE COMMUNICATIONS DEVICE TO A MOTOR VEHICLE FROM A PLURALITY OF MOTOR VEHICLES

PROCÉDÉ POUR FOURNIR DES RÉGLAGES SPÉCIFIQUES D'UN UTILISATEUR DANS UN VÉHICULE AUTOMOBILE ET PROCÉDÉ POUR DÉTERMINER UNE ASSOCIATION ENTRE UN APPAREIL DE COMMUNICATION MOBILE ET UN VÉHICULE AUTOMOBILE PARMI PLUSIEURS VÉHICULES AUTOMOBILES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.07.2011   DE 102011106887**

(43) Veröffentlichungstag der Anmeldung:
**14.05.2014   Patentblatt 2014/20**

(73) Patentinhaber: **Audi AG**
**85045 Ingolstadt (DE)**

(72) Erfinder: **REICH, Andreas**
**85114 Buxheim (DE)**

(74) Vertreter: **Brandt, Kai**
**Audi AG**
**Patentabteilung I/EZ-1**
**85045 Ingolstadt (DE)**

(56) Entgegenhaltungen:
**US-A1- 2008 200 209**

• **Anonymous: "DriveNow bewegt mit modernster Technik", , 9. Juni 2011 (2011-06-09), XP55037539, Gefunden im Internet: URL:http://blog.drive-now.de/2011/06/09/dr ivenow-bewegt-%E2%80%93-dank-modernster-fa hrzeug-ortungs-und-identifikationstechnik/ #more-45 [gefunden am 2012-09-07]**
• **Sven Beiker: "Carsharing 2.0", , 6. Oktober 2010 (2010-10-06), XP55037538, Gefunden im Internet: URL:http://www.stanford.edu/class/me302/Pr eviousTerms/2010-10-05%20Carsharing.pdf [gefunden am 2012-09-07]**

EP 2 729 904 B1

**Beschreibung**

Die Erfindung betrifft in einem Aspekt ein Verfahren zum Bereitstellen nutzerspezifischer Einstellungen in einem Kraftfahrzeug. In einem anderen Aspekt betrifft sie ein Verfahren zum Ermitteln einer Zuordnung eines mobilen Kommunikationsgeräts zu einem Kraftfahrzeug aus einer Mehrzahl von Kraftfahrzeugen.

Aus der DE 600 37 898 T2 ist es bekannt, dass ein Kraftfahrzeugschlüssel in Kommunikation mit einer Kommunikationseinrichtung des Kraftfahrzeugs tritt, und zwar über eine Bluetooth-Verbindung. Es ist hierbei der Benutzer, der sicherstellen muss, dass sich der Schlüssel in ausreichender Nähe zum Kraftfahrzeug befindet. Ist dies der Fall, können persönliche Einstellungen, die für den Besitzer des Schlüssels spezifisch sind, geladen werden.

Die DE 10 2009 037 086 A1 beschreibt einen Fahrzeugschlüssel, in welchem persönliche Daten speicherbar sind. Vom Kraftfahrzeug wird sogar bei dessen Verlassen die Position gespeichert. Es ist dadurch ermöglicht, dass das Kraftfahrzeug anhand der gespeicherten Positionsdaten aufgefunden wird.

Persönliche Daten bzw. nutzerspezifische Einstellungen können in einem Kraftfahrzeug vorgesehene Menüeinstellungen in einem Bediengerät sein. Sie können auch mechanische Einstellungen betreffen, zum Beispiel solche eines Sitzes, eines Lenkrads, eines Spiegels oder dergleichen.

Die Vorgehensweisen im Stand der Technik, wie persönliche Daten aktivierbar sind, gehen stets davon aus, dass ein und derselbe Benutzer ein und dasselbe Kraftfahrzeug benutzt, wobei nicht einmal ein Wechsel des Fahrers vorgesehen ist.

Es stellt aber eine größere Herausforderung dar, nutzerspezifische Einstellungen auch dann vorzusehen, wenn das Kraftfahrzeug von unterschiedlichen Nutzern genutzt wird oder wenn sogar eine Mehrzahl (eine Flotte) von Kraftfahrzeugen von einer Mehrzahl von Nutzern im Wechsel genutzt wird.

Weiterhin ist aus dem Stand der Technik bekannt, wie im Artikel Anonymous: "DriveNow bewegt mit modernster Technik", 9. Juni 2011, URL: http://blog.drive-now.de/2011/06/09/drivenow-bewegt-%E2%80%93-dank-modernster-fahrzeug-ortungs-und-identifikationstechnik/#more-45, offenbart, ein System zum Finden, Öffnen und Starten eines Kraftfahrzeugs aus einer Mehrzahl von von mehreren Nutzern nutzbaren Kraftfahrzeugen bekannt. Verfügbare Kraftfahrzeuge können über das Internet oder ein mobiles Kommunikationsgerät angezeigt werden. Dabei kann eine An- und Abmeldung des Fahrzeugs im Fahrzeug selbst über den Bildschirm erfolgen. In jedem der Fahrzeuge befindet sich ein GPS-System, das die GPS-Position Fahrzeugs ausschließlich in dem Moment an einen Server weitergibt, wenn der Nutzer das Fahrzeug abmeldet. Der an den Server übermittelte Standort des Fahrzeugs wird auf der Karte einer Website und in einer Smartphone-Applikation vermerkt.

Die US 2008/200209 A1 offenbart ein tragbares Speichergerät, wie z.B. ein mobiles Kommunikationsgerät, mittels welchem sich ein Kraftfahrzeug öffnen und starten lässt. Auf dem Speichergerät können auch benutzerspezifische Einstellungen gespeichert werden, die an einen Bordcomputer übertragen werden und durch das Fahrzeug eingestellt werden. Im Fall einer Fahrzeugflotte, wie die eines Fahrzeugverleihs, können, wenn der Benutzer das erste Mal ein Fahrzeug benutzt, die von ihm vorgenommen Einstellungen auf dem tragbaren Speichergerät gespeichert werden und wenn er das Fahrzeug zurückgibt, auf eine zentrale Datenbank übertragen werden. Wenn der Benutzer das nächste Mal ein Fahrzeug leiht, können die Einstellungen wieder von der zentralen Datenbank auf das Speichergerät und dann vom Speichergerät ins Fahrzeug geladen werden. Weiterhin kann ein Benutzer durch das mobilen Kommunikationsgerät mit einer zentralen Datenbank kommunizieren. Dadurch lassen sich beispielsweise in der Nähe des Benutzers geparkte, zur Verfügung stehende Kraftfahrzeuge identifizieren. Am Ende eines Ausleihvorgangs, kann der Benutzer den Ausleihvorgang über sein mobiles Kommunikationsgerät als beendet erklären. Dabei können gleichzeitig die Daten über die Position des Kraftfahrzeugs übermittelt werden.

Es ist somit die Aufgabe der Erfindung, das Bereitstellen nutzerspezifischer Einstellungen in einem Kraftfahrzeug auf möglichst komfortable Weise zu ermöglichen.

Diese Aufgabe wird in einem Aspekt durch ein Verfahren gemäß Patentanspruch 1 gelöst und in einem anderen Aspekt durch ein Verfahren mit den Merkmalen gemäß Patentanspruch 5 gelöst.

Bei dem erfindungsgemäßen Verfahren zum Bereitstellen nutzerspezifischer Einstellungen in einem Kraftfahrzeug werden somit

a) zu einem Nutzer spezifische Daten in einer zentralen Datenverarbeitungseinrichtung abgelegt, wobei dem Nutzer ein mobiles Kommunikationsgerät zugeordnet ist, und
b) das Kraftfahrzeug ermittelt seine Position und übermittelt diese drahtlos an die zentrale Datenverarbeitungseinrichtung, wenn es geparkt wird, also insbesondere, wenn es zum Stehen gebracht wird und entweder der Fahrersitz verlassen wird oder das Fahrzeug abgeschlossen wird oder beides.

Im nachfolgenden Schritt c) wird die Position des geparkten Kraftfahrzeugs von der zentralen Datenverarbeitungseinrichtung an das mobile Kommunikationsgerät übermittelt. Sodann ermittelt in Schritt d) das mobile Kommunikationsgerät seine eigene Position wiederholt und vergleicht sie jeweils mit der Position der geparkten Kraftfahrzeugs. Falls sich das mobile Kommunikationsgerät nach einem vorbestimmten Kriterium in der Nähe des geparkten Kraftfahrzeugs befindet, wird diese Information des Sich-in-der-Nähe-Befindens an die zentrale Datenverarbeitungseinrichtung übermittelt. Ferner werden e) durch die zentrale Datenverarbeitungseinrichtung bei Erhalt der Information die für den dem mobilen Kommunikationsgerät zugeordneten Nutzer spezifischen Daten an das (in der Nähe des mobilen Kommunikationsgeräts geparkte) Kraftfahrzeug übermittelt. Schließlich nimmt in Schritt f) das Kraftfahrzeug anhand der übermittelten spezifischen Daten die nutzerspezifischen Einstellungen vor.

Das erfindungsgemäße Verfahren setzt für eine Personalisierung vorliegend eine zentrale Datenverarbeitungseinrichtung ein. Wenn diese die Daten verwaltet, nämlich die zu dem Nutzer spezifischen Daten einerseits und die Position des geparkten Kraftfahrzeugs andererseits, dann ist es unerheblich, ob das geparkte Kraftfahrzeug von einem anderen Nutzer wegbewegt wird, denn nach dem erneuten Parken wird die Position abermals an die zentrale Datenverarbeitungseinrichtung übermittelt und steht auch demjenigen mobilen Kommunikationsgerät zur Verfügung, dessen Nutzer das geparkte Kraftfahrzeug zuletzt nicht benutzte. Außerdem ist es durch die Verwendung einer zentralen Datenverarbeitungseinrichtung möglich, Einstellungen auch außerhalb des Kraftfahrzeugs und ohne die Verwendung des mobilen Kommunikationsgeräts vorzunehmen, nämlich zum Beispiel an einem Personalcomputer; die Einstellungen werden dann an die zentrale Datenverarbeitungseinrichtung übermittelt und später von dieser an das Kraftfahrzeug.

Bei einer bevorzugten Ausführungsform der Erfindung ist das Kraftfahrzeug Teil einer Gruppe von Kraftfahrzeugen (Mehrzahl von Kraftfahrzeugen bzw. Flotte). Es werden die Positionen aller Kraftfahrzeuge der Gruppe ermittelt, wenn diese geparkt werden, und die Positionen werden über den Umweg der zentralen Datenverarbeitungseinrichtung an das mobile Kommunikationsgerät übermittelt und jeweils mit der Position des mobilen Kommunikationsgeräts verglichen. Die für den Nutzer spezifischen Daten werden an ein jeweils in der Nähe des mobilen Kommunikationsgeräts geparktes Kraftfahrzeug übermittelt.

Bei diesem Aspekt der Erfindung wird deutlich, dass das Verfahren nach Anspruch 1 bei seiner Anwendung auf eine Mehrzahl von Kraftfahrzeugen die Nutzung der nutzerspezifischen Einstellungen in einer Vielzahl von Kraftfahrzeugen nacheinander oder im Wechsel ermöglicht. Dies ist hier abermals wegen der Verwendung der zentralen Datenverarbeitungseinrichtung einerseits ermöglicht und andererseits dadurch, dass das mobile Kommunikationsgerät selbsttätig erkennt, welches der Kraftfahrzeuge aus der Gruppe jeweils in der Nähe befindlich ist und daher wahrscheinlich von dem Nutzer des mobilen Kommunikationsgeräts in Kürze gefahren werden soll.

Bei einer bevorzugten Ausführungsform der Erfindung beinhaltet das vorbestimmte Kriterium, nach dem geprüft wird, ob sich das mobile Kommunikationsgerät in der Nähe des geparkten Kraftfahrzeugs befindet, dass auf das Bestehen eines Höchstabstands zwischen dem mobilen Kommunikationsgerät und dem Kraftfahrzeug geprüft wird. Der Höchstabstand kann entweder über die Luftlinie definiert sein oder als Wegstrecke auf vorbestimmten Wegen, die zum Beispiel in einer Navigationsfunktionalität des mobilen Kommunikationsgeräts zur Verfügung stehen. Es wird bei diesem bevorzugten Aspekt bevorzugt ermittelt, wie oft das Ereignis eintritt, dass die Daten in Schritt e) übermittelt werden, ohne dass das Kraftfahrzeug gestartet wird. Bei Erreichen einer absoluten oder auf Zeitintervallen (insbesondere Zeiteinheiten) bezogenen Mindesthäufigkeit dieses Ereignisses wird sodann der Höchstabstand verringert. Durch diese Maßnahme wird vermieden, dass ein Nutzer, der sich in der Nähe eines Kraftfahrzeugs aufhält, ohne es fahren zu wollen-zum Beispiel wenn es vor einem Haus geparkt ist, in dem er wohnt - ein ständiges Übermitteln der nutzerspezifischen Daten und gegebenenfalls ein jeweils erneutes Vornehmen der Einstellungen, vielleicht auch noch im Wechsel mit einer anderen Nutzerperson, bewirkt.

Die Einstellungen betreffen bevorzugt Menüeinstellungen eines Bediengeräts des Kraftfahrzeugs und/oder die Präsentation bestimmter Daten wie zum Beispiel einer in der zentralen Datenverarbeitungseinrichtung zuvor abgelegten Straßenkarte und/oder mechanische Einstellungen eines Sitzes, Lenkrads, Spiegels oder dergleichen. Durch die Erfindung ist die Zahl der Einstellungen steigerbar, weil die zugehörigen persönlichen, nutzerspezifischen Daten ja nicht in dem mobilen Kommunikationsgerät abgelegt werden müssen, sondern in der zentralen Datenverarbeitungseinrichtung vorliegen.

Das Verfahren gemäß dem zweiten Aspekt der Erfindung (nach Patentanspruch 5) beinhaltet gewissermaßen die Schritte c) und d) von Patentanspruch 1 unter Anwendung auf eine Fahrzeugflotte: Es wird eine Zuordnung eines mobilen Kommunikationsgeräts zu einem Kraftfahrzeug aus einer Mehrzahl von Kraftfahrzeugen ermittelt, wobei die Kraftfahrzeuge jeweils ihre Position ermitteln und diese drahtlos an eine zentrale Datenverarbeitungseinrichtung übermitteln, jedes Mal, wenn sie geparkt werden, und die zentrale Datenverarbeitungseinrichtung die Positionen der Fahrzeuge an ein mobiles Kommunikationsgerät übermittelt, welches anhand seiner eigenen Position und der Positionen der Fahrzeuge eine Zuordnung zu einem der Fahrzeuge nach einem vorbestimmten Kriterium ableitet. Die Zuordnung besteht insbesondere darin, dass der Nutzer des mobilen Kommunikationsgeräts voraussichtlich in Kürze das Kraftfahrzeug benutzen wird.

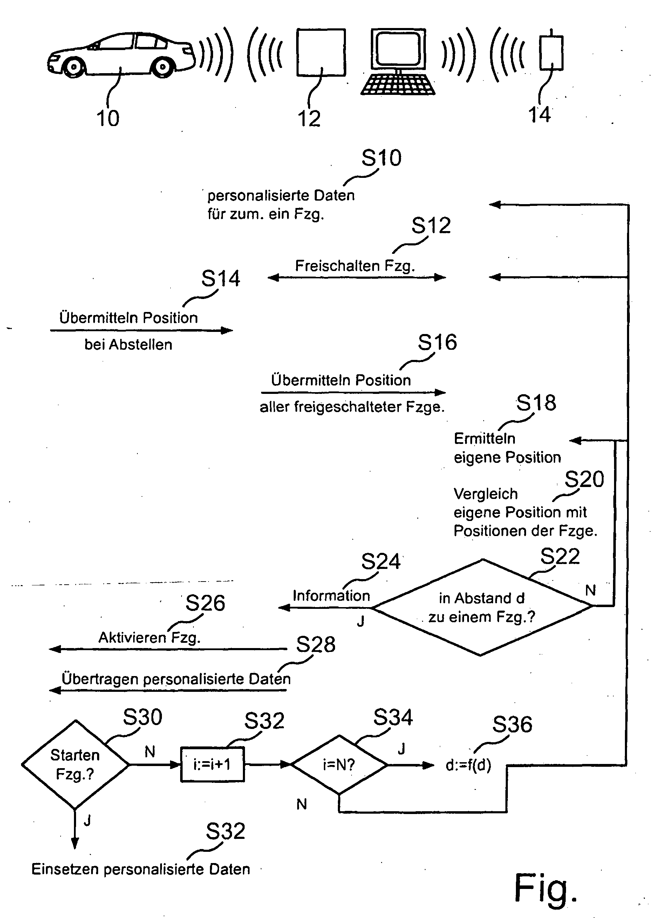

Nachfolgend wird eine bevorzugte Ausführungsform der Erfindung unter Bezug auf die Zeichnung näher beschrieben, in der die einzige Figur ein Flussschaubild zur Erläuterung des Datenflusses zwischen den Einheiten Kraftfahrzeug, zentrale Datenverarbeitungseinrichtung und mobiles Kommunikationsgerät bei dem erfindungsgemäßen Verfahren gemäß beiden Aspekten ist.

Vorliegend soll ein Kraftfahrzeug 10 mit einer zentralen Datenverarbeitungseinrichtung 12 bidirektional kommunizieren können, mit der auch ein mobiles Kommunikationsgerät 14 bidirektional kommunizieren kann. Das Kraftfahrzeug 10 ist hierbei ein Kraftfahrzeug aus einer Mehrzahl von Kraftfahrzeugen einer Kraftfahrzeugflotte. Genauso gibt es eine Mehrzahl von Nutzern der Kraftfahrzeuge, denen jeweils ein eigenes mobiles Kommunikationsgerät 14 zugeordnet ist.

Ein Nutzer soll vorliegend bestimmte Einstellungen zum Beispiel in einem Menü eines Kraftfahrzeug vorgenommen haben oder auch seinen Sitz, sein Lenkrad, seinen Seitenspiegel und die Rückspiegel o.a. entsprechend eingestellt haben, sodass das Fahrzeug für ihn persönlich optimal eingestellt ist. Der Nutzer möchte diese Daten nun in einer Mehrzahl von Kraftfahrzeugen ähnlichen Typs verwenden. Selbst bei Kraftfahrzeugen unterschiedlichen Typs sind personalisierte Daten einsetzbar; beispielsweise können die Sitzeinstellungen aus einem Audi A6 auch auf einen Audi A8 übertragen werden, obwohl gegebenenfalls mehr Einstellmöglichkeiten zur Verfügung stehen; umgekehrt können die Sitzeinstellungen aus einem Audi A8 in vereinfachter Form auch beim Audi A6 genutzt werden, wenn dort weniger Einstellmöglichkeiten zur Verfügung stehen.

Damit diese personalisierten Daten genutzt werden können, um persönliche Einstellungen vorzunehmen, werden sie in Schritt S10 für zumindest ein Fahrzeug zunächst in der zentralen Datenverarbeitungseinrichtung 12 abgelegt, beispielsweise über eine Datenverbindung von einem Personalcomputer aufgespielt oder auch durch Kommunikation zwischen einem Kraftfahrzeug 10 und der zentralen Datenverarbeitungseinrichtung 12 überspielt.

Die zentrale Datenverarbeitungseinrichtung 12 muss nun über die Information verfügen, dass ein Nutzer eines mobilen Kommunikationsgeräts 14 berechtigt ist, ein bestimmtes Fahrzeug zu nutzen. Dies bezeichnet man als "Freischalten", wobei vorliegend ein solches Freischalten eines Fahrzeugs in Schritt S12 erfolgt.

Es ist nun davon ausgegangen, dass das Kraftfahrzeug 10 gefahren wurde. Wenn das Kraftfahrzeug 10 abgestellt wird, wenn also zum Beispiel ein Sitzbelegungssensor das Verlassen des Kraftfahrzeugs erkennt und/oder das Kraftfahrzeug 10 von außen abgeschlossen wird, so übermittelt das Kraftfahrzeug 10 in Schritt S14 seine Position an die zentrale Datenverarbeitungseinrichtung 12. Die Position ist dem Kraftfahrzeug 10 bekannt, wenn es über einen entsprechenden Positionserfassungssensor verfügt, der zum Beispiel das globale Positionierungssystem, GPS, nutzt.

Dies geschieht vorliegend für eine Mehrzahl von solchen Fahrzeugen 10. Die zentrale Datenverarbeitungseinrichtung 12 übermittelt nun in Schritt S16 die Position aller für das mobile Kommunikationsgerät 14 freigeschalteten Fahrzeuge, die gleichzeitig abgestellt sind, an das mobile Kommunikationsgerät. In Schritt S18 ermittelt dieses dann seine eigene Position, zum Beispiel ebenfalls mithilfe des GPS. Im Schritt S20 vergleicht das mobile Kommunikationsgerät 14 seine eigene Position mit den Positionen der Fahrzeuge, die in Schritt S16 übermittelt wurden. In Schritt S22 wird sodann als Ergebnis des Vergleichs überprüft, ob sich das mobile Kommunikationsgerät 14 in einem Abstand zu dem Fahrzeug befindet, der sich in einem Umkreis des Abstands d von dem Fahrzeug befindet. Solange dies nicht der Fall ist, werden die Schritte S18 und S20 wiederholt, gegebenenfalls werden sogar die Schritte S10 und S12 wiederholt. Sobald sich aber das mobile Kommunikationsgerät 14 innerhalb eines Umkreises des Kraftfahrzeugs 10 befindet, der so gewählt ist, dass davon ausgegangen werden kann, dass der Nutzer des mobilen Kommunikationsgeräts 14 bewusst in die Nähe des Kraftfahrzeugs 10 gegangen ist, so wird eine diesbezügliche Information in Schritt S24 an die zentrale Datenverarbeitungseinrichtung 12 übermittelt. Diese aktiviert daraufhin das Kraftfahrzeug 10 in Schritt S26. (Ein so genanntes "Aufwecken" wird durchgeführt.) Sodann werden in Schritt S28 die personalisierten Daten, die auf der zentralen Datenverarbeitungseinrichtung 12 in Schritt S10 abgelegt wurden, an das Kraftfahrzeug 10 übertragen. In Schritt S30 wird dann geprüft, ob das Kraftfahrzeug 10 tatsächlich gestartet wird, ob also die Vermutung richtig war, dass sich der Nutzer des mobilen Kommunikationsgeräts 14 zum Zwecke des Bewegens des Kraftfahrzeugs 10 in dessen Nähe begeben hat. Wenn dies der Fall ist, werden in Schritt S32 die personalisierten Daten dazu eingesetzt, entsprechende Einstellungen vorzunehmen, nämlich Daten zu präsentieren, Menüeinstellungen anzuzeigen oder auch mechanische Einstellungen vorzunehmen. Wenn das Kraftfahrzeug 10 nicht gestartet wird, obwohl sich das mobile Kommunikationsgerät 14 in der Nähe des Kraftfahrzeugs 10 befand, dann wird ein Zähler in Schritt S32 um Eins erhöht. (Der Zähler kann zum Beispiel gleichzeitig mit dem Durchführen des Schritts S10 auf Null gesetzt werden.) Erreicht der Zähler dann eine Schwelle N, worauf in Schritt S34 geprüft wird, dann wird der Abstand d in Schritt S36 neu definiert, zum Beispiel wird der bisherige Abstandswert d um einen bestimmten Meterbetrag verringert, dann wäre f(d) = d - c. Genauso ist es auch möglich, die Abstandsänderung vom Abstand d proportional abhängig zu gestalten oder in sonstiger Abhängigkeit zu gestalten, etwa nach:

$$d := d \cdot (1 - \delta).$$

Solange in Schritt S34 der Schwellwert noch nicht erreicht ist oder nach Festlegen eines neuen Abstands wird zum Schritt S18 zurückgekehrt, oder es wird sogleich zu den Schritten S10 und S12 zurückgekehrt.

Die Maßnahme, den Höchstabstand zu einem der Fahrzeuge neu festzulegen, hat den Hintergrund, dass bestimmte Nutzer sich aus baulichen Gründen, zum Beispiel bei ihrem Wohnhaus, häufiger in die Nähe des Kraftfahrzeugs 10 bewegen könnten, ohne dass sie dieses nutzen wollen. Irgendwann wird der Abstand d ausreichend klein gewählt, sodass nicht in überflüssiger Weise jedes Mal in Schritt S26 ein Aktivieren des Fahrzeugs erfolgt und das Übertragen der personalisierten Daten in Schritt S28 erfolgt.

Das Verfahren ist somit in gewisser Hinsicht ein lernendes Verfahren. Diese Lernfunktion ist jedoch für das Verfahren nicht zwingend, sondern es kann auch ein konstanter Abstand d vorgesehen sein.

Das in Schritt S22 vorgenommene Prüfkriterium kann sich auf einen Luftlinienabstand beziehen oder auf einen Wegstreckenabstand (Pfadlänge) auf Fußgängerwegen, auf denen sich der Nutzer des mobilen Kommunikationsgeräts 14 bewegt.

## Patentansprüche

1. Verfahren zum Bereitstellen nutzerspezifischer Einstellungen in einem Kraftfahrzeug (10), bei dem

   a) zu einem Nutzer spezifische Daten in einer zentralen Datenverarbeitungseinrichtung (12) abgelegt werden, wobei dem Nutzer ein mobiles Kommunikationsgerät (14) zugeordnet ist,
   b) das Kraftfahrzeug (10) seine Position ermittelt und drahtlos an die zentrale Datenverarbeitungseinrichtung (12) übermittelt (S14), wenn es geparkt wird,
   c) die Position des geparkten Kraftfahrzeugs (10) von der zentralen Datenverarbeitungseinrichtung (12) an das mobile Kommunikationsgerät (14) übermittelt wird (S16),
   d) das mobile Kommunikationsgerät (14) seine eigene Position wiederholt ermittelt (S18) und jeweils mit der Position des geparkten Kraftfahrzeugs (10) vergleicht und, falls das mobile Kommunikationsgerät (14) sich nach einem vorbestimmten Kriterium (S22) in der Nähe des geparkten Kraftfahrzeugs (10) befindet, diese Information an die zentrale Datenverarbeitungseinrichtung (12) übermittelt (S24), wobei ferner
   e) die zentrale Datenverarbeitungseinrichtung (12) bei Erhalt der Information die für den dem mobilen Kommunikationsgerät (14) zugeordneten Nutzer spezifischen Daten an das Kraftfahrzeug (10) übermittelt (S28),
   f) das Kraftfahrzeug (10) anhand der übermittelten spezifischen Daten die nutzerspezifischen Einstellungen vornimmt (S32).

2. Verfahren nach Anspruch 1,
   **dadurch gekennzeichnet, dass**
   das Kraftfahrzeug (10) Teil einer Gruppe von Kraftfahrzeugen ist, dass die Positionen aller Kraftfahrzeuge der Gruppe ermittelt werden, wenn diese geparkt werden und über die zentrale Datenverarbeitungseinrichtung (12) an das mobile Kommunikationsgerät (14) übermittelt werden und mit der Position des mobilen Kommunikationsgeräts (14) verglichen werden, und wobei die für den Nutzer spezifischen Daten an ein jeweils in der Nähe des mobilen Kommunikationsgeräts geparktes Kraftfahrzeug übermittelt werden.

3. Verfahren nach Anspruch 1 oder 2,
   **dadurch gekennzeichnet, dass**
   das vorbestimmte Kriterium beinhaltet, dass auf das Bestehen eines Höchstabstands in der Luftlinie oder auf Wegstrecken zwischen dem mobilen Kommunikationsgerät (14) und dem Kraftfahrzeug (10) geprüft wird, wobei ermittelt wird (S32), wie oft das Ereignis eintritt, dass die Daten in Schritt e) übermittelt werden, ohne dass das Kraftfahrzeug gestartet wird, und wobei bei Erreichen einer absoluten oder auf Zeitintervalle bezogenen Mindesthäufigkeit dieses Ereignisses (S34) der Höchstabstand verringert wird (S36).

4. Verfahren nach einem der vorhergehenden Ansprüche,
   **dadurch gekennzeichnet, dass**
   die Einstellungen die Präsentation von Daten und/oder Menüeinstellungen eines Bediengeräts des Kraftfahrzeugs und/oder mechanische Einstellungen eines Sitzes, Lenkrads, Spiegels betreffen.

5. Verfahren zum Ermitteln einer Zuordnung eines mobilen Kommunikationsgeräts (14) zu einem Kraftfahrzeug (10) aus einer Mehrzahl von Kraftfahrzeugen, wobei die Kraftfahrzeuge jeweils ihre Position ermitteln und diese drahtlos an eine zentrale Datenverarbeitungseinrichtung (12) übermitteln, jedes Mal, wenn sie geparkt werden, und die zentrale Datenverarbeitungseinrichtung (12) die Positionen der Kraftfahrzeuge (10) an ein mobiles Kommunikationsgerät (14) übermittelt, welches anhand seiner eigenen Position und der Positionen der Kraftfahrzeuge eine Zuordnung zu einem der Kraftfahrzeuge nach einem vorbestimmten Kriterium ableitet.

## Claims

1. Method for providing user-specific settings in a motor vehicle (10), in which:

   a) user-specific data is stored in a central data-processing device (12), wherein a mobile communication device (14) is associated with the user;
   b) when parked, the motor vehicle (10) determines its position and transmits (S14) it wirelessly to the central data-processing device (12);

c) the position of the parked motor vehicle (10) is transmitted (S16) from the central data-processing device (12) to the mobile communication device (14);

d) the mobile communication device (14) repeatedly determines (S18) its own position and compares said position with the position of the parked motor vehicle (10) and, if, based on a predetermined criterion (S22), the mobile communication device (14) is located in the proximity of the parked motor vehicle (10), it transmits (S24) this information to the central data-processing device (12), wherein further,

e) upon receipt of said information, the central data-processing device (12) transmits (S28) the data, which is specific to the user associated with the mobile communication device (14), to the motor vehicle (10);

f) using the transmitted specific data, the motor vehicle (10) carries out (S32) the user-specific adjustments.

**2.** Method according to claim 1, **characterised in that** the motor vehicle (10) is part of a group of motor vehicles, **in that** the positions of all motor vehicles in the group are determined when the motor vehicles are parked and the positions are transmitted to the mobile communication device (14) via the central data-processing device (12) and compared with the position of the mobile communication device (14), and the user-specific data being transmitted to a motor vehicle which is parked in the proximity of the mobile communication device.

**3.** Method as according to either claim 1 or claim 2, **characterised in that** the predetermined criterion specifies that checks are carried out for the existence of a maximum distance in a straight line, or for distances between the mobile communication device (14) and the motor vehicle (10), it being determined (S32) how frequently the result occurs that the data in step e) are transmitted without the motor vehicle being started, and the maximum distance being reduced (S36) when an absolute minimum frequency of this result (S34), or a minimum frequency thereof which is based on time intervals, is achieved.

**4.** Method according to any of the preceding claims, **characterised in that** the settings relate to the presentation of data and/or menu settings of an operating device of the motor vehicle and/or mechanical settings for a seat, a steering wheel or a mirror.

**5.** Method for determining an association of a mobile communication device (14) with a motor vehicle (10) from a plurality of motor vehicles, wherein the motor vehicles determine their respective position and transmit said position wirelessly to a central data-processing device (12) each time they are parked, and the central data-processing device (12) transmits the positions of the motor vehicles (10) to a mobile communication device (14) which, using its own position and the positions of the vehicles, derives an association with one of the vehicles according to a predetermined criterion.

**Revendications**

**1.** Procédé de mise au point de réglages spécifiques à un utilisateur dans un véhicule à moteur (10), dans lequel :

a) on mémorise des données spécifiques à un utilisateur dans un dispositif de traitement de données central (12), dans lequel on affecte à l'utilisateur un appareil de communication mobile (14),

b) le véhicule à moteur (10) détermine sa position et la transmet (S14) sans fil au dispositif de traitement de données central (12) lorsqu'il est parqué,

c) la position du véhicule à moteur parqué (10) est transmise (S16) par le dispositif de traitement de données central (12) à l'appareil de communication mobile (14),

d) l'appareil de communication mobile (14) détermine (S18) sa position propre de manière répétée et la compare respectivement à la position du véhicule à moteur parqué (10) et, au cas où l'appareil de communication mobile (14) se trouve, selon un critère prédéterminé (S22), au voisinage du véhicule à moteur parqué (10), cette information est transférée (S24) au dispositif de traitement de données central (12), dans lequel, ensuite,

e) le dispositif de traitement de données central (12) transfère (S28) au véhicule à moteur (10), à la réception de l'information, les données spécifiques à l'utilisateur affectées à l'appareil de communication mobile (14) et

f) le véhicule à moteur (10) exécute (S32) les réglages spécifiques à l'utilisateur sur la base des données spécifiques transmises.

**2.** Procédé selon la revendication 1, **caractérisé en ce que** :

le véhicule à moteur (10) fait partie d'un groupe de véhicules à moteur, les positions de tous les véhicules à moteur du groupe sont déterminées lorsque ceux-ci sont parqués et transmises à l'appareil de communication mobile (14) via le dispositif de traitement de données central (12) pour être comparées à la position de l'appareil de communication mobile (14), et dans lequel les données spécifiques à l'utilisateur sont transmises à un véhicule à moteur respectivement parqué au voisinage de l'appareil de communication mobile.

**3.** Procédé selon la revendication 1 ou la revendication 2,
**caractérisé en ce que** :

le critère prédéterminé implique de tester l'existence d'une distance maximale à vol d'oiseau ou le parcours entre l'appareil de communication mobile (14) et le véhicule à moteur (10), dans lequel on détermine (S32) la fréquence à laquelle se produit cet incident où les données sont transférées à l'étape e) sans que le véhicule à moteur n'ait démarré et dans lequel, lorsque l'on atteint une fréquence minimale de cet incident (S34) absolue ou fonction de l'intervalle de temps, la distance maximale est réduite (S36).

**4.** Procédé selon l'une quelconque des revendications précédentes,
**caractérisé en ce que** :

les réglages concernent la présentation de données et/ou les réglages de menu d'un appareil de service du véhicule à moteur et/ou des réglages mécaniques d'un siège, du volant de direction et d'un miroir.

**5.** Procédé de détermination d'une affectation d'un appareil de communication mobile (14) à un véhicule à moteur (10) parmi une pluralité de véhicules à moteur, dans lequel les véhicules à moteurs déterminent respectivement leur position et les transmettent sans fil à un dispositif de traitement de données central (12), chaque fois qu'ils se parquent, et le dispositif de traitement de données central (12) transmet les positions des véhicules à moteur (10) à un appareil de communication mobile (14) qui, sur la base de sa position propre et des positions des véhicules à moteurs, en tire une affectation à l'un des véhicules à moteur selon un critère prédéterminé.

EP 2 729 904 B1

Fig.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 60037898 T2
- DE 102009037086 A1

- US 2008200209 A1

**In der Beschreibung aufgeführte Nicht-Patentliteratur**

- **ANONYMOUS.** DriveNow bewegt mit modernster Technik. 09. Juni 2011